# EUROPÄISCHE PATENTANMELDUNG

(11) **EP 1 134 189 A1**
(43) Veröffentlichungstag der Anmeldung: **19.09.2001**
(21) Anmeldenummer: 00105391.7
(22) Anmeldetag: 16.03.2000
(51) Int. Cl.: C01B 37/00

(54) **Formkörper amorpher, poröser (Metall-)Silikate**

(71) Anmelder: Degussa AG, 40474 Düsseldorf (DE)
(72) Erfinder: Hasenzahl, Steffen Dr., 63477 Maintal (DE); Jantke, Ralf, 63776 Mömbris (DE)

(57) **Zusammenfassung**

Formkörper von amorphen, porösen (Metall-) Silikate, welche einen einheitlichen Mesoporendurchmesser beziehungsweise eine enge Mesoporenradienverteilung ein Mesoporenvolumen größer als 0,5 ml/g, eine spezifische Oberfläche größer als 500 m²/g, bevorzugt größer als 700 m²/g sowie keine ausgeprägte Fernordnung aufweisen, werden hergestellt, indem man eine Metallsilikatlösung mit einer Säure in Gegenwart eines organischen Templats umsetzt, den gebildeten Feststoff in einem formgebenden Verfahren einsetzt und die Formkörper thermisch behandelt und gegebenenfalls weiter modifiziert.

Die Formkörper werden als Katalysatoren, Katalysatorträger und/oder Adsorbentien verwendet.

## Beschreibung

Die Erfindung betrifft Formkörper von amorphen, porösen (Metall-)Silikaten mit einheitlichem Mesoporendurchmesser, ein Verfahren zu ihrer Herstellung und ihre Verwendung.

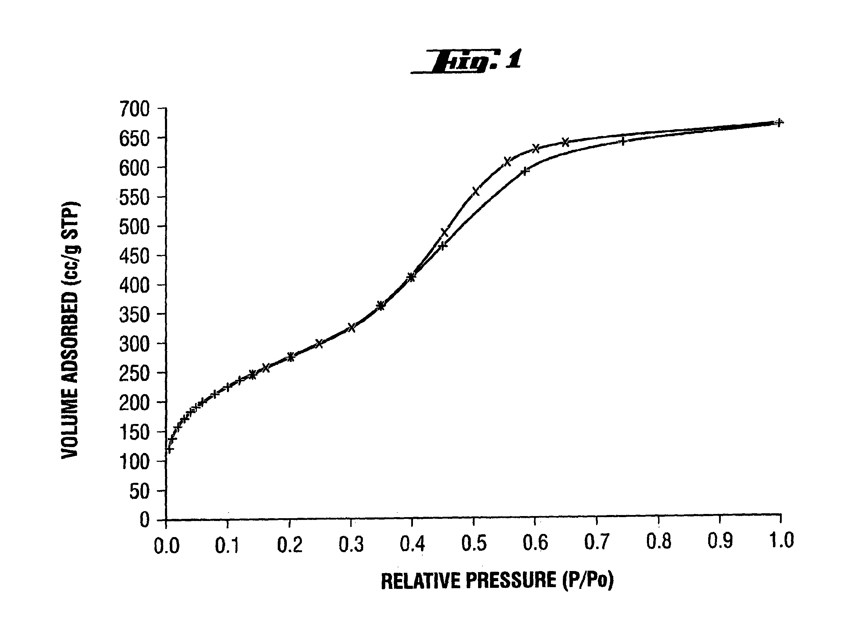

Poröse, kristalline Silikate mit regelmäßiger Mesoporenstruktur sind seit Beginn der 90er Jahre bekannt (zum Beispiel EP-B 0 512 026). Sie werden mit der Abkürzung M41S bezeichnet und weisen neben der regelmäßigen Mesoporenstruktur eine enge Mesoporenradienverteilung auf. Die bekannteste Verbindung aus dieser Gruppe trägt die Bezeichnung MCM-41 und ist durch hexagonal angeordnete, zylindrische Mesoporen mit einem Durchmesser zwischen 1,6 und 10 nm gekennzeichnet. Die hexagonale Struktur belegen Transmissionselektronenmikroskopie- und Elektronenbeugungsaufnahmen. Letztere zeigen punktförmige Reflexe, die unter Annahme einer hexagonalen Einheitszelle indiziert werden können (vgl. Figur 1 in C.T. Kresge et al., Nature 359 (1992) 710). MCM-48 mit einer dreidimensionalen Porenstruktur ist durch eine kubische Elementarzelle charakterisiert. (Beck et al., J. Am. Chem. Soc. 114 (1992) 10834).

M41S-Materialien zeigen Pulverröntgendiffraktogramme mit mehreren Reflexen im Kleinwinkelstreubereich bei 2Θ-Winkeln < 8°. Die spezifische Oberfläche beträgt zwischen 700 bis 1.400 m²/g, das Mesoporenvolumen zwischen 0,7 und 1,2 ml/g.

Charakteristisch für die Herstellung von Materialien mit MCM-41- und MCM-48-Struktur ist der Einsatz von Tensiden vom Typ Me₃N(CₙH₂ₙ₊₁)⁺X⁻ mit n > 8 als strukturbildendes Agens. Häufig eingesetzt werden beispielsweise Cetyltrimethylammonium-Verbindungen (Cetyl = C₁₆H₃₃). X⁻ ist im Allgemeinen ein Anion aus der Reihe OH⁻, Cl⁻, Br⁻.

Als Siliziumquellen können Natriumwasserglas, Tetramethylammoniumsilikatlösungen, Kieselsole, pyrogenes Siliziumdioxid oder Tetraalkoxysilane eingesetzt werden. Die Synthesen von M41S-Materialien werden üblicherweise bei pH-Werten größer als 9 und bei Temperaturen von oder über 100 °C durchgeführt (Chen et al., Microp. Mat. 2 (1993) 17; Beck et al., J. Am. Chem. Soc. 114 (1992) 10834). Die Kristallisationsdauer beträgt, abhängig von der Kristallisationstemperatur, zwischen einem und zwölf Tagen.

US-A 5,840,264, WO 96/29297 und P.T. Tanev, T.J. Pinnavaia, Science 267 (1995) 865 beschreiben hexagonale, mesoporöse (Metall-)Silikate (abgekürzt als HMS). Dieses zeichnen sich ebenfalls durch regelmäßig angeordnete Poren mit Durchmesser zwischen 1,6 und 3,1 nm und spezifischen Oberflächen bis zu 1.150 m²/g aus. Das Röntgenpulverdiffraktogramm zeigt einen breiten Reflex bei einem Netzebenenabstand d von ∼ 1.8 nm. Beugungsreflexe höherer Ordnung werden nicht beobachtet. Dennoch belegen Elektronenbeugungs- und TEM-Aufnahmen auch hier eine lokale hexagonale Symetrie (P.T. Tanev et al., Chem. Mater. 8(1996) 2068). Das Auftreten von nur einem breiten Reflex im Röntgendiffraktogramm wird auf starke Linienverbreiterung infolge der geringen Größe der "scattering domains" (11 - 15 nm) zurückgeführt. Außerdem beobachtet man zusätzlich erheblich größere Poren, die als "textural mesopores" im Unterschied zu den oben genannten "framework-confined-mesopores" bezeichnet werden.

Die Herstellung solcher Materialien erfolgt durch saure Hydrolyse von Tetraalkoxysilanen in Gegenwart von langkettigen primären Aminen der Formel (CₙH₂ₙ₊₁)NH₂ mit n > 8.

Silikate mit einer ungeordneten, aber hexagonal-ähnlichen Kanalstruktur beschreiben S.A. Badshaw et al., Science, 269 (1995) 1242 (abgekürzt als MSU-Materialien). Sie sind durch zylindrische bis hexagonale Poren mit einem einheitlichen Porendurchmesser zwischen 2,5 und 4,8 nm (abhängig von der Wahl des Tensids) charakterisiert. Die spezifische Oberfläche liegt zwischen 605 und 1190 m²/g. Das Röntgenpulverdiffraktogramm zeigt im Allgemeinen ebenfalls nur einen breiten Reflex bei d ≈ 4,6 nm.

MSU-Materialien werden durch saure Hydrolyse von Tetraalkoxysilane in Gegenwart von Alkylpolyethylenoxid-Alkoholen (C₁₁₋₁₅H₂₃₋₂₆)O(CH₂CHO₂)ₙH mit n = 9-30 hergestellt. Eigene Versuche, diese Synthese nachzustellen, haben jedoch gezeigt, dass die Ausbeute gering ist.

US 5,840,271 beschreibt poröses Siliziumdioxid mit enger Mesoporenradienverteilung, das nicht kristallin ist und nur eine "Nahordnungsstruktur" besitzt. Die Elektronenbeugungsaufnahmen zeigen im Unterschied zu denen von M41S-Materialien, keine punktförmigen Beugungsreflexe sondern nur diffuse Beugungsringe deren Radius einem Netzebenenabstand von etwa 3,0 nm entspricht. Das Mesoporenvolumen des dort beschriebenen Produktes (Beispiel 1) beträgt 0,36 ml/g. Der Durchmesser der Poren liegt überwiegend unter 2,5 nm, Poren mit einem Durchmesser größer 10 nm treten nicht auf.

Die Synthese erfolgt durch saure Hydrolyse von Tetraethylortosilikat in Gegenwart nicht-ionischer Tenside. Beschrieben wird die Verwendung von para-Nonylphenol, dass mit 15 Ethylenoxideinheiten ethoxiliert ist (C₉H₁₉-C₆H₄-O-(CH₂-CH₂-O)₁₅H). Die Synthese kann jedoch nur bei pH-Werten ≤ 2 durchgeführt werden. Bei pH=4,5 entstehen die gewünschten Produkte bereits nicht mehr.

Die bekannten Verfahren haben den Nachteil, dass die Produkte als feinteilige Pulver anfallen. Für viele Anwendungen, zum Beispiel als Katalysatoren oder Adsorbenzien, müssen jedoch Formkörper eingesetzt werden. Dabei werden Extrudate, Tabletten oder Granulate mit einem Durchmesser von mindestens 0,5 mm im Allgemeinen bevorzugt.

Von besonderer Bedeutung jedoch ist, dass durch die Formgebung weder das Mesoporenvolumen noch die spezifische Oberfläche des Ausgangsmaterials wesentlich reduziert werden. Außerdem müssen die Formkörper eine ausreichende mechanische Stabilität besitzen.

Obwohl in der Literatur zahlreiche Verfahren zur Formgebung von mikroporösen Materialien (vor allem Zeolithen) beschrieben werden (zum Beispiel DE 42 02 671), gibt es nur wenige Beispiele zur Verformung mesoporöser Materialien. Es war außerdem zu erwarten, dass mesoporöse Materialien aufgrund ihres hohen Templatgehalts (> 40 Gew.-%, wenn unkalziniert), beziehungsweise ihres hohen Gesamtporenvolumens (mehrere ml/g, wenn kalziniert) nicht wie mikroporöse Materialien verformt werden können. Der Templatgehalt letzterer beträgt im allgemeinen zwischen 10 und 20 Gew.-%. Das Gesamtporenvolumen ist im allgemeinen deutlich kleiner als 1 ml/g. Es ist weiterhin bekannt, dass die mechanische Stabilität von Materialien mit regelmäßigen Mesoporen im allgemeinen nicht sehr hoch ist, insbesondere in Gegenwart von Wasser (T. Tatsumi et al. J. Porous Materials 6, (1999) 13). Formgebungsverfahren unter Aufwendung von Druck, wie sie die Extrusion, Tablettierung oder Kompaktierung darstellen, sollten daher zu einer Schädigung der Porenstruktur führen.

Mesoporöse Oxidformkörper beschreibt DE 196 24 862. Dazu werden Oxidvorläufer in einem Reaktionsmedium aus mindestens zwei nicht mischbaren Fluiden in Gegenwart von Tensiden hergestellt. Mesoporöses Siliziumdioxid erhält man bespielsweise durch saure Hydrolyse von Tetraethylorthosilicat in einer Mesitylen-Wasser-Emulsion in Gegenwart von Cetyltrimethylammoniumbromid bei 45°C und einer Rührgeschwindigkeit von 250 min⁻¹. Der Durchmesser der so erhaltenen spährischen Partikel liegt zwischen 15 bis 20 µm. Die Materialien sind ebenfalls kristallin und besitzen eine hexagonale Einheitszelle mit P6 oder P6_{3/mmc}-Symmetrie.

Die Herstellung von Monolithen wird in Gölther et al, Adv. Mat. 1997, 431-436 dargestellt. Dazu wird Tetraethylorthosilikat in Gegenwart von Tensiden langsam in einem offenen Gefäß hydrolisiert. Auf diese Weise können die verwendeten Lösungsmittel, insbesondere Wasser und gebildete Alkohole entweichen. Problematisch ist jedoch vor allem die Bildung von Rissen bei Trocknen und Kalzinieren.

Die allgemeine Verwendung von Extrudaten von Al-MCM-41 mit *γ*-Aluminiumoxid als Binder als Katalysatorträger beschreibt M. Cheng et al., Appl. Catal. A 183 (1999) 199-208.

Die bekannten Verfahren beziehungsweise die bekannten pulverförmigen Ausgangsstoffe sind demnach nicht geeignet, um Fomkörper mit hoher spezifischer Oberfläche, hohem Mesoporenvolumen und ausreichender mechanischer Stabilität herzustellen. Die bekannten Verfahren zur Herstellung der pulverförmigen Ausgangsmaterialien weisen außerdem alle eine Reihe von weiteren Nachteilen auf:
- Verwendung teurer Rohstoffe, wie zum Beispiel Tetraalkoxysilane oder Aerosile (pyrogene Kieselsäure), quarternäre Ammoniumsalze
- Einsatz druckfester oder ex-geschützter Reaktoren, zum Beispiel bei Verwendung von Tetraethylorthosilicat und/oder brennbaren Lösungsmitteln
- teilweise geringe Ausbeuten.

Es besteht daher die Aufgabe, einfache, kostengünstige und technisch realisierbare Verfahren zu entwickeln, mit denen mechanisch stabile Formkörper von (Metall-)Silikaten mit einheitlichem Mesoporendurchmesser, hohem Mesoporenvolumen und hoher spezifischer Oberfläche hergestellt werden können. Eine weitere Aufgabe ist die Bereitstellung der entsprechenden Formkörper.

Gegenstand der Erfindung sind Formkörper von amorphen, porösen (Metall-)Silikaten, welche dadurch gekennzeichnet sind, daß die (Metall-)Silikate
a) einen einheitlichen Mesoporendurchmesser beziehungsweise eine enge Mesoporenradienverteilung,
b) ein Mesoporenvolumen größer als 0,5 ml/g,
c) eine spezifische Oberfläche größer als 500 m²/g, bevorzugt größer als 700 m²/g,
d) keine ausgeprägte Fernordnung aufweisen.

Ein weiterer Gegenstand der Erfindung ist ein Verfahren zur Herstellung der Formkörpern von amorphen, porösen (Metall)Silikaten, welches dadurch gekennzeichnet ist, dass man eine (Metall-)Silikatlösung mit einer Säure in Gegenwart eines organischen Templats, bevorzugt einem nicht-ionischen Tensid, umsetzt, den gebildeten Feststoff entweder direkt oder nach einem weiterem Verfahrens- oder Modifizierungsschritt in einem formgebenden Verfahren einsetzt, die Formkörper thermisch behandelt und gegebenenfalls weiter modifiziert.

Ein Verfahren zur Synthese von durch Fällung hergestellten porösen, amorphen (Metall-)Silikaten ist in DE 198 41 142.1 beschrieben.

Die bevorzugte Ausführungsformen des Verfahrens umfasst die folgende Schritte:
(1) Herstellen einer Mischung, bestehend aus Wasser, gegebenfalls einer Metallsilikatlösung und einem Tensid (Vorlage),
(2) Fällung: Gleichzeitige Zugabe einer Metallsilikatlösung und einer Säure zu der gerührten Mischung aus (1), die zuvor auf eine bestimmte Temperatur gebracht wurde,
(3) gegebenenfalls Alterung der Reaktionsmischung,
(4) Abtrennung, gegebenenfalls Waschen und Trocknen des in (2) gebildeten Feststoffs

Als Metallsilikat-Lösung kann jede Silikatlösung, bevorzugt Alkalimetallsilikat-Lösung, insbesondere Natriumsilikat-Lösung (Wasserglaslösung), eingesetzt werden.

Das Herstellverfahren nach Variante A kann folgendermaßen abgewandelt werden (Variante B und C):
(1) Herstellung einer Mischung aus Wasser, Metallsilikatlösung und Tensid (Variante B) beziehungsweise einer Mischung aus Wasser, Säurelösung und einem Tensid (Variante C) in dem Vorlagegefäß.
(2) Zugabe einer Säurelösung (Variante B) beziehungsweise einer Metallsilikatlösung (Variante C) zu der gerührten Mischung aus (1), die zuvor auf eine bestimmte Temperatur gebracht wurde.

Die Schritte (3) und (4) werden im wesentlichen wie bei Variante A beschrieben durchgeführt.

Als Tenside können kationische, nichtionische oder anionische Tenside eingesetzt werden. Bevorzugt werden nichtionische Tenside auf Polyethylenoxidbasis, zum Beispiel ethoxilierte Alkohole oder Alkylphenole, verwendet. Weitere in Frage kommende Tenside sind in DE 198 41 142.1 beziehungsweise in Ullmann's Encylopedia of Industrial Chemistry, 5. Auflage, Band 25A, S. 751 (1994) beschrieben. Die einzige Voraussetzung für die Verwendung eines bestimmten Tensids zur Herstellung der erfindungsgemäßen Materialien ist die Löslichkeit, Mischbarkeit beziehungsweise Dispergierbarkeit in Wasser in dem gewünschten Konzentrations-, pH- und Temperaturbereich.

Die Konzentration des Tensids in der Mischung mit Wasser kann in einem weiten Bereich gewählt werden, ist aber vor allem von den Eigenschaften des eingesetzten Tensids und der Fälltemperatur abhängig.

Die Fällparameter in Schritt (2) insbesondere die eingesetzte Gesamtmenge und Konzentration der Metallsilikatlösung und der Säurelösung, die Zulaufgeschwindigkeit, der pH-Wert vor und während der Fällung, die Fälldauer, die Fälltemperatur sowie die Art und Intensität der Rührung während der Fällung können bevorzugt im Bereich von bekannten Standardkieselsäurefällungen (zum Beispiel gemäß EP 0 789 266) eingehalten werden, können jedoch innerhalb der chemisch, physikalisch und apparativ realisierbaren Grenzen variiert werden.

Bei Verwendung von nichtionischen Tensiden können die Metallsilikat- und Säurelösung derart zudosiert werden, dass der pH-Wert der Reaktionsmischung während der Fällung zwischen 2 und 8, bevorzugt aber zwischen 5 und 7 liegt. Anschließend kann der pH-Wert durch weitere Säurezugabe weiter abgesenkt werden. Die bevorzugte Fälltemperatur kann zwischen 20 und 70 °C, insbesondere zwischen 30 und 50 °C liegen.

Bevorzugt kann ein Natriumwasserglas mit einem Modul von 3,4 - 3,5, einem SiO₂-Gehalt von 26,6 - 27,0 % und einem Na₂O-Gehalt von 7,8 - 8,2 % eingesetzt werden. Als Säuren können beispielsweise Schwefelsäure, Salzsäure, Salpetersäure, Phosphorsäure, Essigsäure oder Ameisensäure eingesetzt werden. Bevorzugt können Schwefel- oder Salzsäure eingesetzt werden.

Die Gesamtmenge der Metallsilikat- und Säurelösung kann so gewählt werden, dass das molare Tensid/SiO₂-Verhältnis nach der vollständigen Zugabe der Edukte zwischen 0,01 und 2,0, bevorzugt zwischen 0,1 und 1,0 und insbesondere zwischen 0,15 und 0,5 liegt.

Metallsilikate, wie zum Beispiel Calciumsilikate, Boro-, Alumo-, Mangan-, Eisen- oder Titansilikate können hergestellt werden, in dem man geeignete weitere Metallsalze in (1) zu der Wasser-Tensid-Mischung gibt oder in (2) mit der Metallsilikat- und Säurelösung zudosiert. Dabei kann die verwendete Säure teilweise oder ganz weggelassen werden. Als weitere Metallsalze können Salze der Elemente B, Al, Ga, Ge, Sn, Ti, Zr, V, Cr, Mo, W, Mn Fe, Co, Cu Ni oder Zn eingesetzt werden. Die Metalle und/oder Metalloxide können auch nachträglich aufgebracht werden.

Nach vollständiger Zugabe der Metallsilikat-, Säure- und gebenenfalls Metallsalzlösung kann die entstandene Suspension in Schritt (3) bei einer Temperatur von 0 °C bis 100 °C, bevorzugt zwischen Raumtemperatur und der Fälltemperatur, gegebenenfalls unter Rühren gealtert werden, wobei 12 h im Allgemeinen ausreichend sind.

Die Abtrennung des gebildeten Feststoffes in (4) kann vorzugsweise durch Filtration, beispielsweise mittels Kammer-, Membranfilterpresse, Bandfilter, Drehfilter oder einer Kombination dieser Filter erfolgen. Zur Trocknung kann ein Umlauf-, Etagen-, Flash-, Spin-flash-, Sprüh-, Wirbelschicht, Stromtrockner oder jedes andere geeignete Trocknungsaggregat verwendet werden.

Der Filterkuchen kann weiterhin einer Mahltrocknung unterworfen werden. Es ist möglich, die Reaktionsmischung aus (3) direkt in einen der genannten Trocknungsschritte einzusetzen.

Vor der Formgebung kann das organische Templat aus dem Porensystem der porösen, amorphen ( Metall-)Silikate durch Extraktion mit einem geeigneten organischen Lösungsmittel, wie zum Beispiel Ketone, Alkohole, Ester oder Ether und/oder thermische Behandlung entfernt werden. Außerdem kann eine Vermahlung vorgeschaltet werden, beziehungsweise das Produkt kann durch weitere chemische Reaktionen modifiziert werden.

In einer bevorzugten Ausführungsform der Erfindung wird jedoch das templathaltige Produkt direkt für die Formgebung eingesetzt.

Die durch Fällung hergestellten porösen, amorphen (Metall-) Silikate können spezifische Oberflächen größer als 500 m²/g bevorzugt größer als 700 m²/g und Mesoporenvolumina größer als 0,5 ml/g, bevorzugt 0,8 ml/g aufweisen. Die (Metall-) Silikate weisen eine enge Mesoporenradienverteilung auf. Dies ist bereits an der im allgemeinen deutlich ausgeprägten Stufe in den N₂-Ad- und Desorptionsisothermen zu erkennen. Der mittlere Mesoporendurchmesser kann zwischen 1,5 und 10 nm, insbesondere zwischen 2 und 5 nm, liegen. Er kann beispielsweise durch die Wahl des Tensids eingestellt werden, wobei der Länge der längsten C-Kette eine besondere Bedeutung zukommt. Die enge Mesoporenverteilung kommt in der geringen Halbwertsbreite der Porenradienverteilungskurve zum Ausdruck. Mikroporen werden im Allgemeinen nicht beobachtet. Die Makroporenvolumina der pulverförmigen, unverformten Materialien, i.a. Zwischenpartikelvolumina, können von mindestens 2,5 ml/g bis 5,0 ml/g betragen.

Die Silanolgruppendichte kann kleiner als 3 OH-Gruppen pro nm² sein.

Die Abwesenheit kristalliner Phasen, das heißt, die fehlende Fernordnung der hier beschriebenen Materialien, kann durch die Transmissionselektronenmikroskopie (TEM), Röntgenpulverdiffraktometrie und Elektronenbeugung nachgewiesen werden. Während die TEM-Aufnahme von MCM-41 (vgl. Seite 10837 von J.S. Beck et al. J. Am. Chem. Soc. 114 (1992) 10834) eine hexagonale Struktur zeigt, kann hier eine wenig geordnete, dreidimensionale Struktur zu beobachtet werden. Außerdem ist das Röntgendiffraktogramm von MCM-41 durch mehrere scharfe Reflexe charakterisiert (vgl. Seite 10836 von J.S. Beck et al.). Die erfindungsgemäßen Materialien können dagegen völlig röntgenamorph sein, es kann nur ein breiter Reflex - infolge des einheitlichen Porendurchmessers - im Kleinwinkelstreubereich beobachtet werden. Bragg-Reflexe höherer Ordnung können nicht beobachtet werden. Während die Elektronenbeugung an M41S-Materialien diskrete Beugungsreflexe liefert, die unter Annahme eines hexagonalen oder kubischen Kristallgitters indiziert werden können, können an den erfindungsgemäßen Materialien nur ein oder mehrere breite Beugungsringe bei d-Abständen > 18 Angström beobachtet werden.

Der SiO₂-Gehalt der Silikate kann mindesten 95 Gew.-%, bevorzugt über 98 Gew.-%, bezogen auf die Trockensubstanz des Pulvers, betragen. Der Metalloxid-Gehalt (MeO, wobei Me = Alkali- oder Erdalkalimetall, bevorzugt Na, K oder Ca ist) kann zwischen 0,0001 und 5,0 Gew.-%, bevorzugt zwischen 0,1 und 1,0 Gew.-% betragen.

Die Metallsilikalite können ein oder mehrere (Halb-) Metall-Oxide enthalten. Dabei kann es sich um Metall- oder Halbmetalle (Metalloide) aus der 1. - 5. Hauptgruppe oder 2. - 8. Nebengruppe handeln. Bevorzugt sind Metalloxide der Metalle aus der Reihe B, Al, Ga, Ge, Sn, Ti, Zr, V, Cr, Mo, W, Mn, Fe, Co, Cu, Ni oder Zn, insbesondere Titan und/oder Aluminium.

In der Zusammensetzung der Metallsilikate kann das Verhältnis SiO₂ zu Metalloxid SiO₂/[MₘOₙ] = 5 - 10.000 mol/mol, bevorzugt 10 - 100 mol/mol, und insbesondere 20 - 60 mol/mol, sein, wobei [MₘOₙ] die Summe der Molzahlen aller enthaltenen Metalloxide MₘOₙ ist. Entsprechend niedriger ist dann der SiO₂-Gehalt bezogen auf die Trockensubstanz des Pulvers. Die Metalloxide können vollständig in der SiO₂-Matrix dispergiert sein oder auch separate Phasen bilden.

Der Formgebungsprozess kann sich aus mehreren Einzelschritten zusammensetzen: Beispielsweise kann das durch Fällung hergestellte poröse, amorphe (Metall-)Silikat mit einheitlichem Mesoporendurchmesser mit dem Binder und gegebenenfalls weiteren Zusatzstoffen gemischt und gegebenfalls nach Zusatz von Wasser oder anderen Flüssigkeiten zu einer homogenen Masse verarbeitet werden.

Die trockene oder leicht feuchte Mischung beziehungsweise Knetmasse wird mit entsprechenden Aggregaten in definierte Formen, wie zum Beispiel Zylinder, Hohlzylinder, röhrenförmige oder zylinderartige Strangpresslinge mit unterschiedlich geformten Mantelflächen, verpresst.

Als Bindemittel eignen sich im Prinzip alle für derartige Zwecke bekannten Stoffe. Bevorzugt werden Oxide des Siliziums, Aluminiums, Bors, Phosphors, Titans, Zirkoniums und/oder Magnesiums verwendet. Besonders bevorzugte Bindemittel sind Siliziumdioxide, Aluminiumoxide, Titanoxide und Tonmineralien. Beispiele für Siliziumdioxide beziehungsweise Siliziumdioxid-Vorstufen sind gefällte oder pyrogene Kieselsäuren, Kieselsole, Tetraalkoxysilane, teilkondensierte Kieselsäureester oder Polysiloxane, für Aluminiumoxid (Pseudo-)Boehmit, für Titandioxid Anatas oder Brookit und für Tonmineralien Montmorillonite, Kaoline, Bentonite und Sepiolithe.

Der Gehalt an Bindemittel, bezogen auf die bei 1.000 °C kalzinierte amorphen, porösen (Metall-)Silikate kann in beliebigen Bereichen variiert werden. Bevorzugt liegt er jedoch zwischen 5 und 70 Gew.-%.

Als weitere Zusatzstoffe können alle organische Substanzen, die dafür geeignet und nach dem Stand der Technik bekannt sind, verwendet werden. Vorzugsweise können organische Polymere, wie zum Beispiel Cellulose, Stärke, Polyacrylate, Polymethacrylate, Polyviniylalkohol, Polyviniylpyrrolidon, Polyisobuten, Polytetrahydrofuran, Polyglykolether und/oder Fettsäurezubereitungen und Wachsemulsionen eingesetzt werden. Diese Substanzen fördern in erster Linie die Bildung einer plastischen Masse während des Knet-, Verformungs- und Trocknungsschritts durch Verbrücken der Primärpartikel und gewährleisten darüber hinaus die mechanische Stabilität des Formkörpers beim Verformen und Trocknen. Diese Substanzen werden beim Kalzinieren wieder aus dem Formkörper entfernt.

Als weitere Zusatzstoffe können Basen oder Säuren zugesetzt werden. Geeignet sind beispielsweise Ammoniak, Amine oder quarternäre Ammoniumsalze sowie Carbonsäuren wie zum Beispiel Ameisen-, Essig- oder Propionsäure. Selbstverständlich können auch Gemische aus zwei oder mehr der oben genannten Zusatzstoffe verwendet werden.

Als weitere Zusatzstoffe können Porenbildner wie Polyalkohole, wie zum Beispiel Fructose, Pentaerythrit, Cellulose oder Sägemehl eingesetzt werden. Diese brennen bei der Kalzinierung heraus und hinterlassen zusätzliche Meso- und Makroporen im Formkörper. Weiterhin können beliebige Komponenten, wie zum Beispiel Zeolithe, pyrogene oder gefällte Oxide, Metalle etc. zugesetzt werden.

Zum Anteigen der Masse können Wasser und/oder organische Lösungsmittel, wie zum Methanol oder Ethanol verwendet werden. Die Reihenfolge, in der die Bestandteile der zu verformenden Masse zugegeben werden, hängt von den eingesetzten Stoffen ab und muss im Einzelfall ermittelt werden.

Nach der Zugabe des Bindemittels zum pulverförmigen Ausgangsmaterial, dem gegebenenfalls die Zusatzstoffe zugegeben worden sind, wird die in der Regel noch pulverförmige Masse 10 bis 180 Minuten im Mischer, zum Beispiel Eirich-Mischer, Kneter oder Extruder homogenisiert. Dabei kann bei Temperaturen im Bereich von ungefähr 10 °C bis zum Siedepunkt des Anteigungsmittel gearbeitet werden. Danach kann die Zugabe der restlichen Bestandteile erfolgen, und das so erhaltene Gemisch wird solange weiter gemischt, bis eine verstrangbare oder extrudierfähige Masse entstanden ist.

Es können für die Mischung und Verformung alle bekannten Misch- und Verformungsvorrichtungen beziehungsweise - verfahren verwendet werden. Derartige bekannt Extrusionsvorrichtungen werden beispielsweise in Ullmann's Enzyklopedie der Technischen Chemie, 4. Auflage, Band 2, S. 295 ff., 1972 beschrieben. Bevorzugt werden Ein-, und Zweischneckenextruder oder eine Strangpresse eingesetzt. Möglich ist jedoch auch die Herstellung um Wabenkörpern.

Die so erhaltenen Grünkörper, deren Durchmesser bevorzugt zwischen 1 und 10 mm liegt, können anschließend bei Raumtemperatur oder erhöhten Temperaturen, gegebenfalls in Gegenwart von Wasserdampf, getrocknet werden.

Anschließend werden die Formkörper in Gegenwart von Luft, Inertgas oder Sauerstoff bei Temperaturen bis zu 1.100 °C kalziniert. Der zeitliche Verlauf der Temperatur, das heißt Aufheizrate, Haltezeiten bei Zwischen- und Endtemperatur, sowie Abkühlrate müssen dabei im Einzelfall optimiert werden. Die Kalzinierung dient zur Entfernung des Templats und der Zusatzstoffe aus dem Grünkörper und beeinflusst in entscheidender Weise die mechanische Stabilität, das Porenvolumen oder die spezifische Oberfläche.

Die erhaltenen Stränge beziehungsweise Extrudate können zerkleinert werden. Sie werden dabei vorzugsweise zu einem Granulat oder Splitt mit einem Partikeldurchmesser von 0,1 bis 5 mm, insbesondere 0,5 bis 2 mm zerkleinert.

Die Formkörper können auf verschiedene Art und Weise modifiziert werden. Die amorphen, porösen Kieselsäuren und Metallsilikate mit regelmäßigen Mesoporen auch bereits vor der Formgebung modifiziert werden.

Beispiele für die Modifizierung sind:
- Der Einbau von Kationen, wie zum Beispiel H⁺, Cs⁺, Seltenerdmetall- oder Edelmetallkationen.
- Die Hydrophobierung oder Funktionalisierung durch Behandeln mit Siliziumorganische Verbindungen, wie zum Beispiel X₄-SiₙRₙ mit X = Cl, Br, I, OH, O-Alkyl oder O-Aryl, R = Alkyl- oder Arylrest oder organofunktionelle Gruppen, wie zum Beispiel (CH₂)₃SO₃H; (CH₂)₃NH₂; (CH₂)₃N⁺Me₃Cl⁻; (CH₂)₂PPh₂.
- Einbau von Metallen oder Metalloxiden durch Umsetzung mit geeigneten Precursormolekülen, wie zum Beispiel TiCl₄, TiBr₄, Ti(OEt)₄, TiCp₂Cl₂ (Cp = Cyclpentadienyl), Mn₂(CO)₁₀, Fe(CO)₅.
- Einbau von Edelmetallen oder Metall-Oxiden durch Imprägnierung mit Lösungen der Metall- oder Edelmetallsalze.

Amorphe, poröse Metallsilikate mit einheitlichem Mesoporendurchmesser lassen sich durch das erfindungsgemäße Verfahren sehr leicht verformen. Die erfindungsgemäßen Formkörper zeichnen sich durch eine beträchtliche mechanische Stabilität aus. Die spezifische Oberfläche der Formkörper entspricht im wesentlichen dem Beitrag des nicht verformten Ausgangsmaterials. Dies gilt ebenso für das Mesoporenvolumen. Auf der anderen Seite kann man jedoch eine beträchtliche Abnahme des Makroporenvolumens, das heißt der Zwischenkornvolumina des unverformten Materials beobachten. Die Schüttdichte der Formkörper kann zwischen 50 und 1000 g/l, bevorzugt zwischen 300 und 450 g/l betragen.

Die erfindungsgemäßen Formkörper können in einer Vielzahl von Anwendungen eingesetzt werden. Sie sind insbesondere als Katalysatoren und Katalysatorträger sowie als Adsorbentien geeignet. Beispiele geeigneter katalytischer Umsetzungen sind die Oxifunktionalisierung von Kohlenwasserstoffen, die Oxidation von Olefinen zu Epoxiden mit Wasserstoffperoxid, Alkyl- oder Aryl-Hydroperoxiden, wie zum Beispiel tert. Butylhydroperoxid oder Phenylethylhydroperoxid (C₆H₅CH₂CH₂OOH) und/oder Sauerstoff, Aromatenalkylierungen, Hydrierungen, Dehydrierungen, Hydratisierungen, Dehydratisierungen, Isomerisierungen, Additions- und Eliminierungsreaktionen, nukleophile und elektrophile Substituitionsreaktionen, Hydroxilierungen von Aromaten und Heteroaromaten, Epoxid-Aldehyd-Umlagerungen, Amminierungen, Ammoximierungen, Polymerisationsreaktionen, Veresterungs- und Veretherungsreaktionen, wie auch katalytische Umsetzungen von Abgasen und Rauchgasen, beziehungsweise Stickoxidentfernung.

Die Extrudate sind außerdem als Träger für Farb-, Geruchs- und Wirkstoffe geeignet.

### Beispiel 1

In einem beheizbaren Rührbehälter wird eine Lösung von 1,32 kg Neodol 91-6E (Firma Shell, Formel n-C₉₋₁₀H₁₉₋₂₁(CH₂CH₂O)₆H) in 21,55 kg entionisiertem Wasser vorgelegt und der pH-Wert durch Zugabe von Natriumwasserglaslösung auf einen pH-Wert von 6,0 eingestellt. Bei einer Fälltemperatur von 40°C werden dann unter kräftigem Rühren 4,84 kg der obengenannten Natriumwasserglaslösung und 1,24 kg einer 50 Gew.-%igen Schwefelsäure an zwei gegenüberliegenden Stellen innerhalb von 60 Minuten zudosiert. Nach beendeter Fällung wird weitere Schwefelsäure bis zu einem pH-Wert von 3,0 zugegeben und die Suspension über Nacht bei 40°C ohne Rührung stehen gelassen. Der Feststoff wird dann über eine Nutsche abgetrennt, mit entionisiertem Wasser gewaschen und bei 110°C getrocknet. Um das Tensid zu entfernen, wird ein Teil des Feststoffes zwei Stunden bei 540°C in Luftatmosphäre kalziniert.

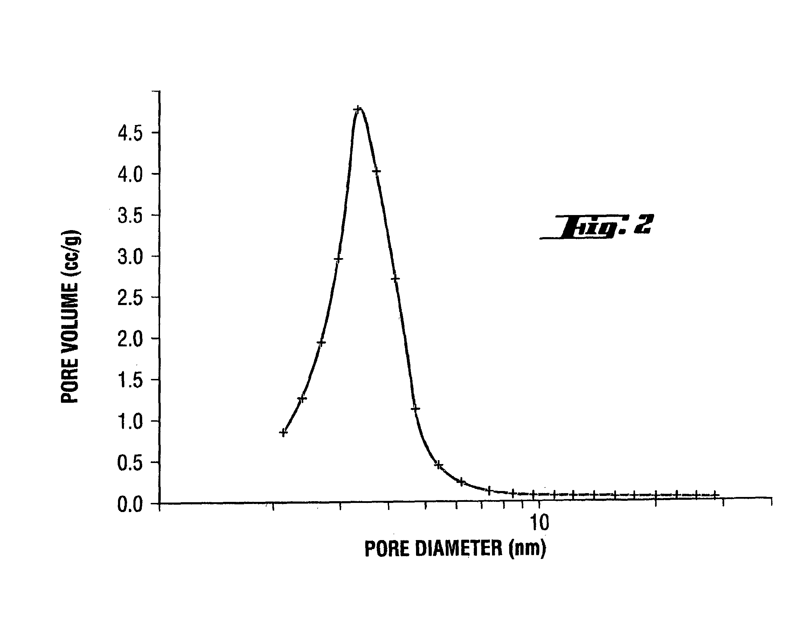

Die N₂-Ad- und Desorptionsisotherme zeigen eine ausgeprägte Stufe zwischen den relativen N₂-Partialdrucken p/p=0,3 bis 0,7 mit ausgeprägter Hysterese (Isotherme vom Typ VI; Figur 1). Das Maximum der Porenradienverteilung (berechnet nach der BJH-Methode; vgl. Figur 2) liegt bei 2,9 nm. Bei hohen N₂-Partialdrucken beobachtet man nur einen geringen weiteren Anstieg der N₂-Isothermen.

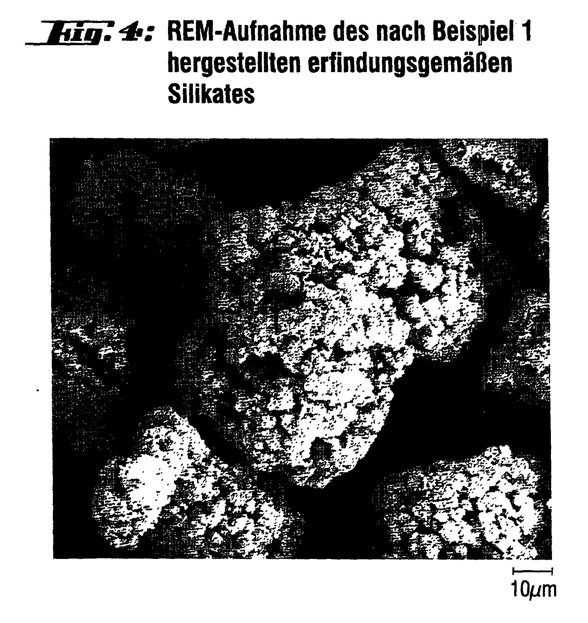

Die BET-Oberfläche beträgt 1145 m²/g. Das Porenvolumen der Poren liegt zwischen 2 und 30 nm 0,85 ml/g. Die mittels Hg-Intrusion ermittelte Makroporenradienververteilung ist durch ein Maximum bei 20 µm gekennzeichnet (vermutlich Zwischenpartikelvolumina vgl. dazu die REM-Aufnahme in Figur 4). Das Porenvolumen für alle Poren größer als 30 nm wird zu 4,33 ml/g bestimmt. Erfahrungsgemäß wird das Makroporenvolumen jedoch wesentlich durch eine Vermahlung oder Formgebung beeinflußt.

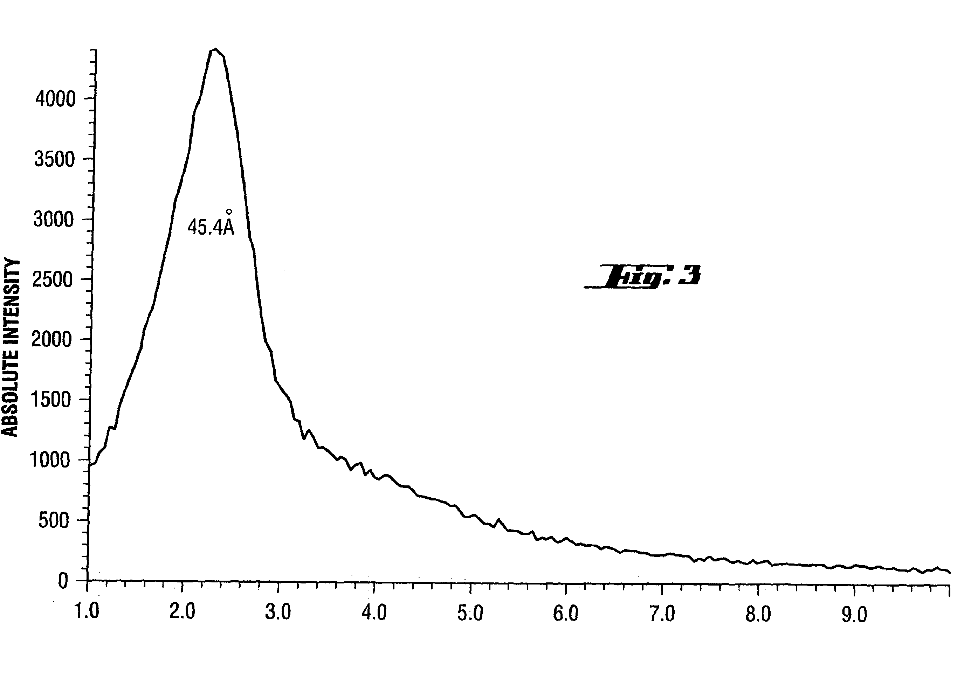

Das Röntgenpulverdiffraktogramm zeigt einen intensiven, breiten Reflex mit einem Maximum bei 2Θ = 2,3° (Figur 3), dies entspricht einem Netzebenenabstand d₁₀₀ = 4,5 nm. Aufgelöste Bragg-Reflexe höherer Ordnung, die beispielsweise bei M41S-Materialien auf eine ausgeprägte Fernordnung hinweisen, werden nicht beobachtet.

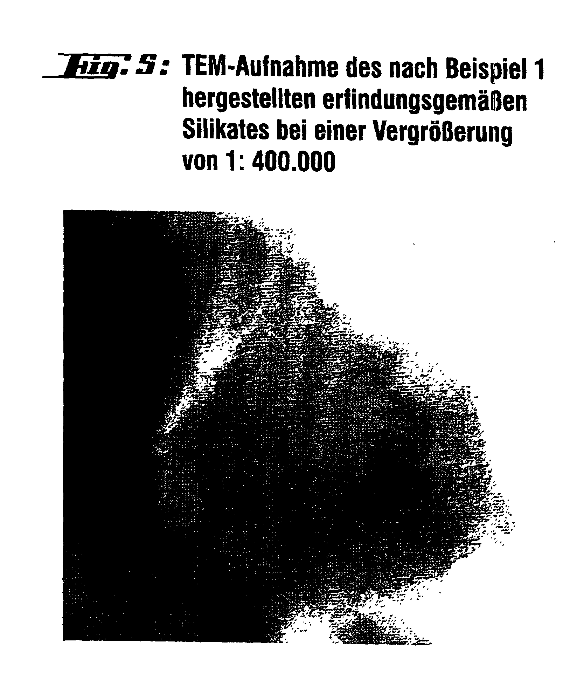

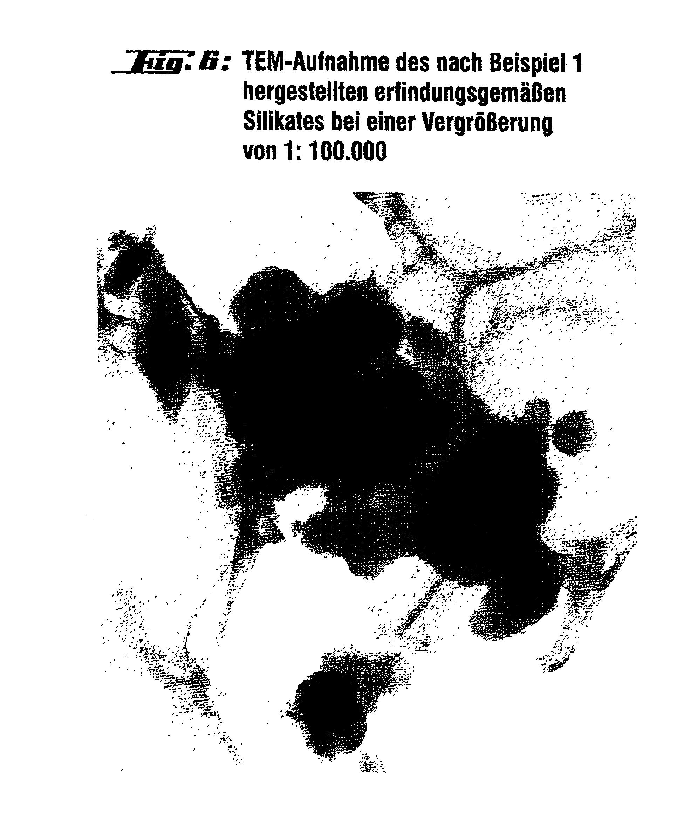

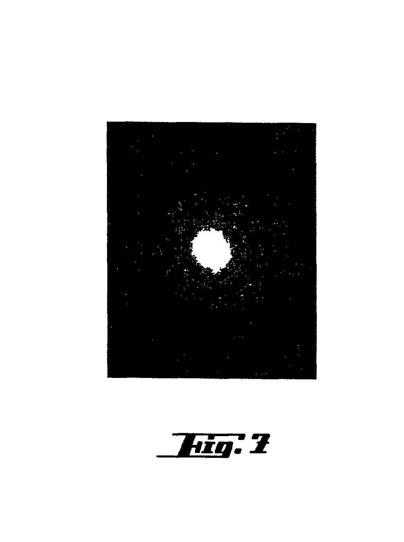

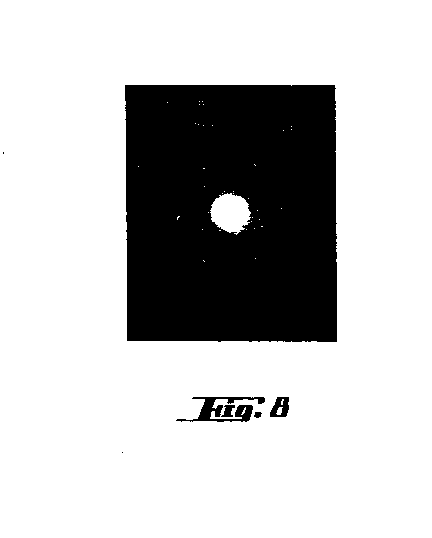

Die Transmissions- und Rasterelektronenmikroskopieaufnahmen (TEM und REM) zeigen 0,5 bis 7 µm große unregelmäßige geformte, aber abgerundete Partikel, die zu 5 bis 200 µm großen, porösen Körnern aggregiert sind (Figuren 4 und 5). TEM-Aufnahmen höherer Vergrößerung offenbaren eine Porenstruktur mit 3 bis 5 nm großen Poren (Figur 6). Eine Fernordnung, zum Beispiel eine hexagonale Anordnung zylindrischer Poren wie bei dem bekannten MCM-41, ist jedoch nicht vorhanden. Elektronenbeugung an diesen Strukturen oder äquivalent dazu Laserbeugung an den Negativen von TEM-Aufnahmen liefern einen breiten, diffusen Beugungsring bei einem diffusen d-Abstand zwischen 30 und 45 **Å** (Figur 7). Die Abwesenheit punktförmiger Reflexe in den Elektronenbeugungsaufnahmen (vgl. Figur 8) und von Bragg-Reflexen höherer Ordnung in den Pulverdiffraktogrammen belegen somit, das hier nur eine Nahordung vorliegt: Gekrümmte Kanäle einheitlichen Durchmessers (die beugende Struktureinheit) sind isotrop über die Primärpartikel "verteilt". Im Unterschied zu MCM-41 ist es daher auch nicht notwendig, die Probe in eine bestimmte Orientierung zum Elektronenstrahl zu bringen, da all drei Raumrichtungen äquivalent sind. Daher benötigt man auch keine Dünnschnitte.

Ein poröses Siliziumdioxid mit Nahordnung, das vergleichbare Elektronenbeugungsaufnahmen liefert, beschreibt US 5,840,271. Das Material wird über einen Sol-Gel-Prozess hergestellt und ist durch ein beträchtlich kleineres Porenvolumen charakterisiert (0,3 ml/g).

Weitere analytische Daten sind im folgenden zusammengefasst:

| | |
|---|---|
| SiO₂-Gehalt (Gew.-%) | 99.6 |
| Na₂O-Gehalt (Gew.-%) | 0.1 |
| SiOH-Dichte (1/nm²) | 1,87 |
| SiOH-Konzentration (mmol/g) | 3,08 |
| pH-Wert (5 Gew.-%ige Lösung) | 4,45 |
| Sears-Zahl (ml) | 44,5 |
| Schüttdichte (g/l) | 180 |
| Stampfdichte (g/l) | 230 |

### Beispiel 2

In einem beheizbaren 2000 l Rührbehälter wird eine Lösung von 70,23 kg Neodol 91-6E (Firma Shell, Formel n-C₉₋₁₀H₁₉₋₂₁(CH₂CH₂O)₆H) in 1223,0 kg entionisiertem Wasser vorgelegt. Der pH-Wert wird durch Zugabe von Natriumwasserglaslösung auf einen pH-Wert von 6,0 eingestellt. Bei einer Fälltemperatur von 40°C werden dann unter kräftigem Rühren 276,4 kg der obengenannten Natriumwasserglaslösung und 69,4 kg einer 50 Gew.-%igen Schwefelsäure an zwei gegenüberliegenden Stellen innerhalb von 60 Minuten zudosiert. Nach beendeter Fällung wird weitere Schwefelsäure bis zu einem pH-Wert von 3,0 zugegeben und die Suspension über Nacht bei 40°C ohne Rührung stehen gelassen. Der Feststoff wird dann über eine Filterpresse abgetrennt, mit entionisiertem Wasser gewaschen und mit Luft trocken geblasen. Der feuchte Filterkuchen wird in einem Vacuumtrockenschrank bei 70°C 30 Stunden getrocknet.

Die analytischen Daten einer bei 550°C kalzinierten Probe des Produktes sind in der unten folgenden Tabelle 1 zusammengefaßt.

### Beispiel 3

In einem 2,5-1-Kneter mit Austragschnecke werden 582,5 g des getrockneten, templathaltigen Produktes aus Bespiel 4 (Glühverlust 48,5 Gew.-%), 88,2 g Tonmineral WestoneL (Firma ECC, Glühverlust 25 Gew.-%) und 18,8 g Methylhydroxycellulose (Tylose MH 1000, Firma Hoechst) eingewogen und zehn Minuten gemischt. Anschließend wird im Laufe von 1,5 Stunden soviel Wasser zugegeben, bis eine extrudierbare Knetmassen entsteht. Diese wird mit einer Förderschnecke unter Verwendung eines Extruders mit einem Mundstückes mit zwölf 2 mm Bohrungen extrudiert.

Die erhaltenen Grünkörper werden mit einem Gebläse angetrocknet, 15 Stunden bei Raumtemperatur und 6 Stunden bei 70 C° getrocknet. Die Kalzinierung erfolgt in Luftatmosphäre bei 550 C° in einem Kammerofen (Aufheizzeit 100 k/h, Haltezeit 3 Stunden).

Die analytischen Daten sind in der Tabelle 1 zusammengefasst. Die Schüttdichte beträgt 351 g/l, die Stampfdichte 362 g/l.

### Bespiel 4

In einem 2,5-1-Kneter mit Austragschnecke werden 582,5 g getrocknetes Produkt aus Beispiel 4 , 102,3 g Pseudoboehmit (Pural SB der Firma Condea; Glühverlust 25 Gew.-%) und 18,8 g Methylhydroxycellulose (Tylose MH 1000 der Firma Hoechst) als Plastifizierer eingewogen und zehn Minuten gemischt. Dann wird eine Lösung von 11,3 g Eisessig (100 Gew.-% p.a., Firma Merck ) in 100 g Wasser zugesetzt. Im Laufe einer Stunde wird dann soviel Wasser zugegeben, bis eine knetbare Masse entsteht und anschließend nochmals 45 Minuten geknetet.

Die Knetmasse wird wie in Beispiel 3 beschrieben extrudiert, getrocknet und kalziniert.

Die analytischen Daten sind in der Tabelle 1 zusammengefaßt. Die Schüttdichte beträgt 370 g/l, die Stampfdichte 384 g/l.

### Beispiel 5

In einem 2,5 l Kneter mit Austragschnecke werden 582,5 g getrocknetes Pulver gemäß Beispiel 4 und 28,2 g Methylhydroxycellulose (Tylose MH 1000 der Firma Hoechst) eingewogen und zehn Minuten gemischt. Dann wird eine Mischung von 187,5 g Kieselsol (Ludox HS-40 der Firma DuPont, SiO₂-Gehalt 40 Gew.-%) und 200g Wasser zugesetzt. Innerhalb von einer Stunde werden soviel Wasser und Tylose MH 1000 zugegeben, bis eine extrudierbare Knetmasse entsteht.

Nach weiteren 30 min Knetzeit wird die Knetmasse, wie in Beispiel 5 beschrieben extrudiert, getrocknet und kalziniert.

Die analytischen Daten sind in der Tabelle 1 zusammengefaßt. Die Schüttdichte beträgt 376 g/l, die Stampfdichte 403 g/l.

### Beispiel 6

In einem 2,5 l Kneter mit Austragschnecke werden 582,5 g getrocknetes Produkt gemäß Beispiel 4, 79,0 g Fällungskieselsäure (Sipernat 500 DS der Firma Degussa-Hüls; Glühverlust 5 Gew.-%) und 28,2 g Tylose MH 1000 eingewogen. Nach zehnminütigem Mischen werden 250 g Wasser zugesetzt. Innerhalb von 1,5 Stunden wird dann portionsweise so viel Wasser zugegeben, bis eine extrudierbare Knetmasse entsteht.

Die Knetmasse wird, wie in Beispiel 3 beschrieben extrudiert, getrocknet und kalziniert.

Die analytischen Daten sind in der Tabelle 1 zusammengefaßt. Die Schüttdichte beträgt 318 g/l, die Stampfdichte 338 g/l.

**Tabelle 1**

| Analytische Daten der Produkte aus den Beispielen 2 bis 6 | | | | | |
|---|---|---|---|---|---|
| Probe aus | BET-Oberfläche (m²/g) | Mesoporen - volumen (ml/g) | Makroporen volumen (ml/g) | n-Hexan-Beladung (g/100 g)* | Bruchhärte (N)** |
| Beispiel 2 | 1000 | 1,00 | 4,49 | 59,8 | - |
| Beispiel 3 | 915 | 0,80 | 0,57 | 47,7 | 9,4 |
| Beispiel 4 | 910 | 0,85 | 0,48 | 49,1 | 8,9 |
| Beispiel 5 | 500 | 0,54 | 0,60 | 33,2 | 5,7 |
| Beispiel 6 | 790 | 0,69 | 0,74 | 38,7 | 3,0 |
| • Bei einem relativen n-Hexan-Partialdruck p/p0 = 0,7 und 20C° Temperatur | | | | | |

## Patentansprüche

1. Formkörper von amorphen, porösen (Metall-) Silikaten, **dadurch gekennzeichnet, daß** die (Metall-) Silikate einen einheitlichen Mesoporendurchmesser beziehungsweise eine enge Mesoporenradienverteilung, ein Mesoporenvolumen größer als 0,5 ml/g, eine spezifische Oberfläche größer als 500 m²/g, bevorzugt größer als 700 m²/g und keine ausgeprägte Fernordnung aufweisen.

2. Verfahren zur Herstellung der Formkörpern von amorphen, porösen Kieselsäuren und Metallsilikaten gemäß Anspruch 1, **dadurch gekennzeichnet, daß** man eine Metallsilikatlösung mit einer Säure in Gegenwart eines organischen Templats, bevorzugt einem nichtionischen Tensid, umsetzt, den gebildeten Feststoff entweder direkt oder nach einem weiterem Verfahrens- oder Modifizierungsschritt in einem formgebenden Verfahren einsetzt, die Formkörper thermisch behandelt und gegebenenfalls weiter modifiziert.

3. Verwendung der Formkörper gemäß Anspruch 1. als Katalysator, Katalysatorträger und/oder Adsorbentien.
